# EUROPEAN PATENT SPECIFICATION

(11) **EP 3 308 952 B1**
(45) Date of publication and mention of the grant of the patent: **11.12.2019**
(21) Application number: 16193465.8
(22) Date of filing: 12.10.2016
(51) Int. Cl.: B32B 41/00, B32B 38/18, B32B 38/06, E04F 15/10, B32B 3/30, B32B 27/30

(54) **PLASTIC FLOORING HAVING REGISTRATION PATTERNS**
KUNSTSTOFFBODENBELAG MIT REGISTRIERUNGSMUSTERN
REVÊTEMENT DE SOL EN PLASTIQUE PRÉSENTANT DES MOTIFS D'ENREGISTREMENT

(43) Date of publication of application: 18.04.2018
(73) Proprietor: Lu, Ding Yi, Jiangsu (CN)
(72) Inventor: Lu, Ding Yi, Jiangsu (CN)
(74) Representative: Cabinet Chaillot

(56) References cited:
- WO-A1-97/31775
- US-A1- 2011 098 839
- US-A1- 2013 295 352

## Description

### FIELD OF THE INVENTION

The present invention relates to plastic flooring which forms registration patterns thereon.

### BACKGROUND OF THE INVENTION

Conventional plastic flooring contains: a substrate, a printing film and an abrasion resistance film which are pressed by three press rollers or six press rollers of a rolling machine so as to form three-dimensional patterns thereon. However, the substrate and the printing film cannot be conveyed synchronously, so the substrate cannot correspond to pressing patterns of the printing film, and a depressed part and the raised part of the pressing patterns cannot align with a pattern portion of each press roller accurately.

US 2013/295352 A1, US 2011/098839 A1 and WO 97/31775 A1 all disclose a plastic flooring having a substrate, a printing layer, and an abrasion resistance layer. The surface of the plastic flooring is provided with a relief creating impressions that matched the decor or pattern of the printing layer, using a so-called registered embossing technique, which involves press elements pressing on the flat laminate product constituted by the substrate, printing layer and abrasion resistance layer.

The present invention has arisen to mitigate and/or obviate the afore-described disadvantages.

### SUMMARY OF THE INVENTION

The primary objective of the present invention is to provide plastic flooring which forms registration patterns thereon. To obtain the above objective, plastic flooring provided by the present invention provides a combination of a rolling machine and a registration transferring system for forming a plastic flooring as defined in independent claim 1, and a method for forming said plastic flooring as defined in independent claim 5.

### BRIEF DESCRIPTION OF THE DRAWINGS

FIG. 1 is a schematic view showing the operation of a registration transferring system and a rolling machine according to a preferred embodiment of the present invention.
FIG. 2 is a schematic view showing the structure of an electronic control unit according to the preferred embodiment of the present invention.
FIG. 3 is a schematic view showing the operation of a part of the registration transferring system and the rolling machine according to the preferred embodiment of the present invention.
FIG. 4 is a schematic view showing the assembly of a printing layer according to the preferred embodiment of the present invention.
FIG. 5 is a schematic view showing the operation of the registration transferring system according to the preferred embodiment of the present invention.
FIG. 6 is a schematic view showing the assembly of plastic flooring according to the preferred embodiment of the present invention.
FIG. 7 is a cross sectional view showing the assembly of the plastic flooring according to the preferred embodiment of the present invention.

### DETAILED DESCRIPTION OF THE PREFERRED EMBODIMENTS

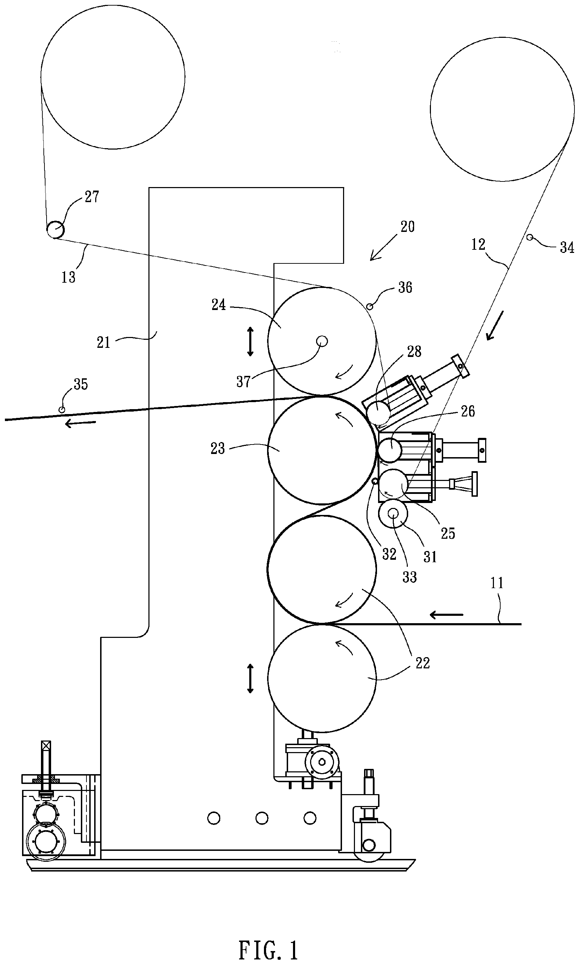

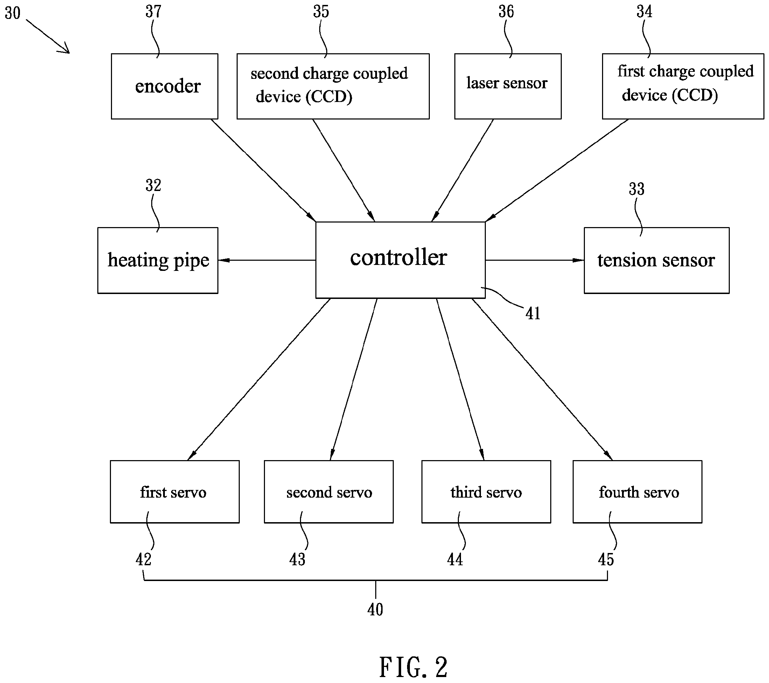

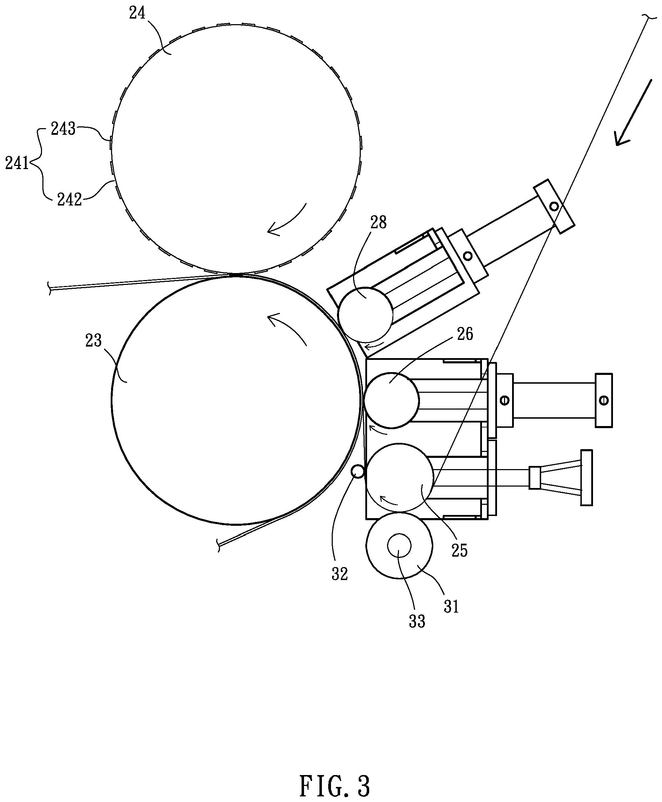

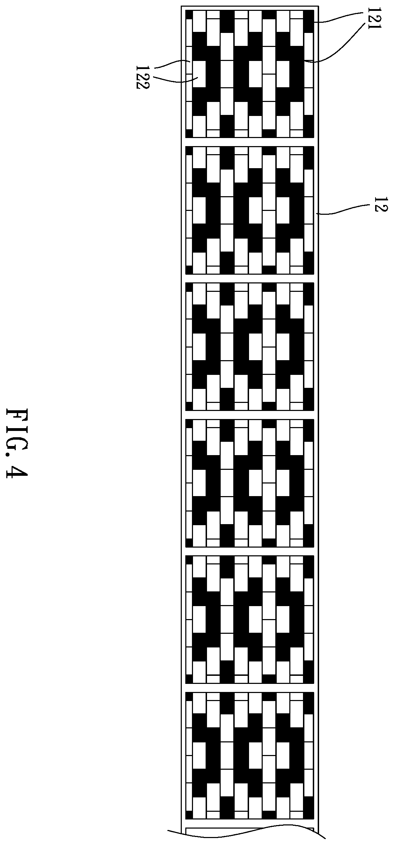

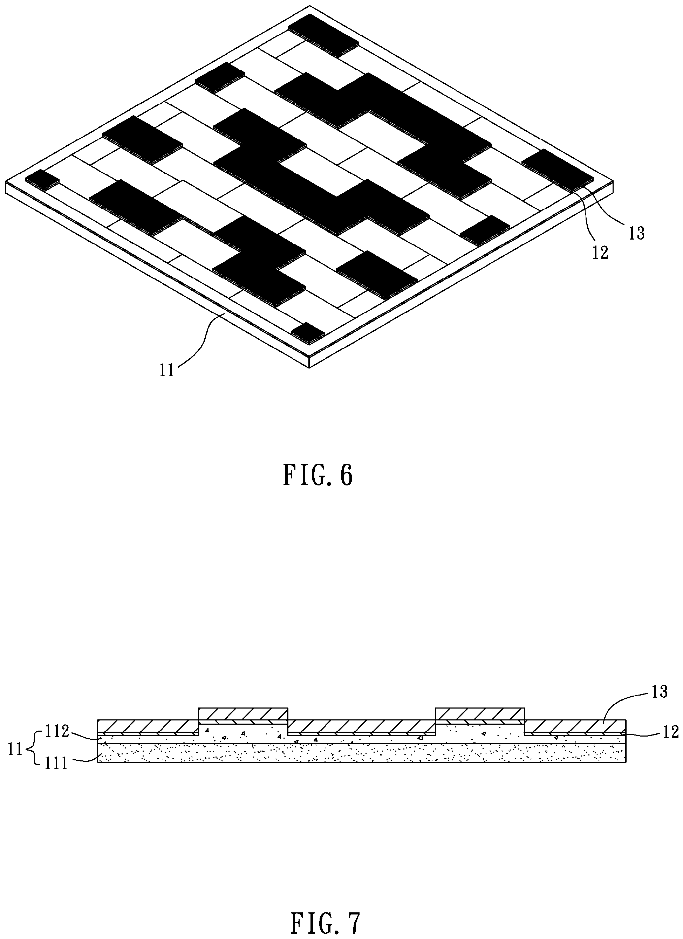

With reference to FIGS. 1 to 7, plastic flooring according to a preferred embodiment of the present invention comprises: a substrate 11, a printing layer 12, and an abrasion resistance layer 13 which are all delivered into a rolling machine 20 so that the rolling machine 20 rolls and presses the substrate 11, the printing layer 12, and the abrasion resistance layer 13 together by mating with a registration transferring system 30, thus forming registration patterns on the plastic flooring has.

The substrate 11 includes at least one soft film layer 111 and at least one hard film layer 112, wherein the at least one soft film layer 111 is made of polyvinyl chloride (PVC) material in which plasticizer is added, and the at least one hard film layer 112 is made of polyvinyl chloride (PVC) material in which plasticizer is not added. In another embodiment, the at least one soft film layer 111 and the at least one hard film layer 112 are made of polyvinyl chloride (PVC) material in which calcium carbonate is added. Alternatively, the at least one hard film layer 112 is made of polyvinyl chloride (PVC) material in which vesicant is added. In another embodiment, the at least one hard film layer 112 is made of polyvinyl chloride (PVC) material in which vesicant or precipitated calcium carbonate (PCC) is added.

The printing layer 12 forms on a top of the substrate 11 and has a convex portion 121 and a concave portion 122.

The abrasion resistance layer 13 is transparent and forms on the printing layer 12 so as to protect the printing layer 12.

The rolling machine 20 is fixed in a support frame 21 and includes two delivery rollers 22, a guiding roller 23, and a pattern roller 24 which are all configured to deliver the substrate 11, the printing layer 12, and the abrasion resistance layer 13 into the rolling machine 20 so that the rolling machine 20 presses the substrate 11, the printing layer 12, and the abrasion resistance layer 13 together. Preferably, a first press roller 25 and a second press roller 26 are fixed among the printing layer 12, the guiding roller 23, and the pattern roller 24, and a third press roller 27 and a fourth press roller 28 are mounted among the abrasion resistance layer 13, the guiding roller 23, and the pattern roller 24. The pattern roller 24 has pressing patterns 241 corresponding to the convex portion 121 and the concave portion 122 of the printing layer 12, and the pressing patterns 241 have a depressed part 242 and a raised part 243.

The registration transferring system 30 is disposed on a delivery path along which the substrate 11, the printing layer 12, and the abrasion resistance layer 13 are delivered to the rolling machine 20. The registration transferring system 30 includes a feeding roller 31, a heating pipe 32, a tension sensor 33, a first charge coupled device (CCD) 34, a second charge coupled device (CCD) 35, a laser sensor 36, an encoder 37, and an electronic control unit (ECU) 40. The feeding roller 31 and the heating pipe 32 are secured beside the guiding roller 23, the tension sensor 33 is fixed on a rotary shaft of the feeding roller 31, the first CCD 34 is mounted on a starting position of the delivery path to the printing layer 12 so as to detect color codes and node information of the printing layer 12, and the second CCD 35 is disposed on a convey position of the delivery path to the plastic flooring so as to detect an error value of the plastic flooring. The laser sensor 36 is fixed outside the pattern roller 24 so as to detect an original mark of the pattern roller 24, the encoder 37 is secured on a rotary shaft of the pattern roller 24 so as to detect speed mark of the pattern roller 24, and the first CCD 34, the second CCD 35, the laser sensor 36, and the encoder 37 are electrically connected with the ECU 40 in a wireless communication manner so that sensed information of the first CCD 34, the second CCD 35, the laser sensor 36, and the encoder 37 are sent to the ECU 40.

The ECU 40 includes a controller 41, a first servo 42 configured to drive the feeding roller 31 to rotate, a second servo 43 configured to drive the pattern roller 24 to rotate, a third servo 44 configured to drive the guiding roller 23 to revolve, a fourth servo 45 configured to actuate the two delivery rollers 22 to rotate. The controller 41 is electrically connected with the first servo 42, the second servo 43, the third servo 44, the fourth servo 45, the first CCD 34, the second CCD 35, the encoder 37, the heating pipe 32, and the tension sensor 33, such that the controller 41 receives the sensed information of the first CCD 34, the second CCD 35, the laser sensor 36, and the encoder 37 so as to judge whether the printing layer 12 and the substrate 11 are delivered synchronously. For example, when the printing layer 12 and the substrate 11 are not delivered synchronously, the controller 41 controls the first servo 42, the second servo 43, the third servo 44, the fourth servo 45, the heating pipe 32, and the tension sensor 33 to operate so as to convey the printing layer 12 and the substrate 11 synchronously again. In addition, when the substrate 11, the printing layer 12, and the abrasion resistance layer 13 are pressed together, the convex portion 121 corresponds to the depressed part 242 and the concave portion 122 corresponds to the raised part 243 by way of the registration transferring system 30, thus forming the registration patterns on the plastic flooring.

The printing layer 12 is delivered through the first press roller 25 and the feeding roller 31, and the substrate 11 is outputted from the two delivery rollers 22 so as to be pressed with the printing layer 12 by the guiding roller 23 and the second press roller 26, thereafter the printing layer 12 and the substrate 11 are delivered into and are pressed by the guiding roller 23 and the pattern roller 24.

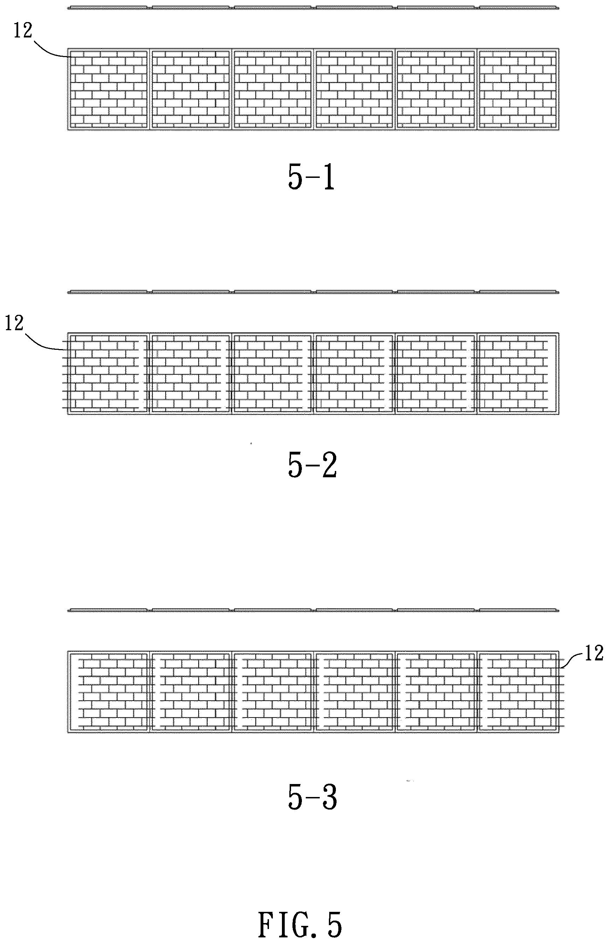

The registration transferring system 30 operates based on steps of (A), (B), (C), and (D):
In the step of (A), when the printing layer 12 is delivered slower than the substrate 11, the controller 41 controls the heating pipe 32 to heat the printing layer 12, hence the printing layer 12 shrinks and is delivered quickly, as shown in a part 5-3 of FIG. 5. Preferably, the controller 41 controls rotating speeds of the first servo 42, the second servo 43, the third servo 44, and the fourth servo 45. When the printing layer 12 and the substrate 11 are conveyed synchronously, the controller 41 turns off the heating pipe 32. When the printing layer 12 is delivered quicker than the substrate 11, as illustrated in a part 5-2 of FIG. 5, the controller 41 controls the second servo 43, the third servo 44, and the fourth servo 45 to drive the pattern roller 24, the guiding roller 23, and the two delivery rollers 22 to rotate quickly, and the controller 41 controls the first servo 42 and the tension sensor 33 to decelerate the feeding roller 31, hence the printing layer 12 is stretched and is delivered slowly, thus conveying the printing layer 12 and the substrate 11 simultaneously, as shown in a part 5-1 of FIG. 5.

In the step of (B), the first CCD 34 detects the color codes and the node information of the printing layer 12 and transmits the sensed information to the controller 41. The encoder 37 detects the speed mark of the pattern roller 24 and transmits the sensed information to the controller 41. The laser sensor 36 detects the original mark of the pattern roller 24 and sends the sensed information to the controller 41.

In the step of (C), the controller 41 compares the color codes of the printing layer 12 and the speed mark of the pattern roller 24 and judges whether the printing later 12 and the substrate 11 are delivered synchronously, after receiving the sensed information of the first CCD 34, the second CCD 35, the laser sensor 36, and the encoder 37. Furthermore, the controller 41 compares the node information of the printing layer 12 and the original mark of the pattern roller 24 so as to determine whether the printing layer 12 and the substrate 11 are stuck exactly.

In the step of (D), when the printing layer 12 and the substrate 11 are delivered synchronously, the plastic flooring is outputted, and the second CCD 35 detects the error value of the plastic flooring.

While the preferred embodiments of the invention have been set forth for the purpose of disclosure, modifications of the disclosed embodiments of the invention as well as other embodiments thereof may occur to those skilled in the art.

## Claims

1. A combination of a rolling machine (20) and a registration transferring system (30), for forming a plastic flooring comprising a substrate (11), a printing layer (12), and an abrasion resistance layer (13) which are all delivered into the rolling machine (20) so that the rolling machine (20) rolls and presses the substrate (11), the printing layer (12), and the abrasion resistance layer (13) together, wherein in the plastic flooring:
the substrate (11) includes at least one soft film layer (111) and at least one hard film layer (112);
the printing layer (12) is on a top of the substrate (11) and has, before delivery to the rolling machine (20), a convex portion (121) and a concave portion (122); and
the abrasion resistance layer (13) is on the printing layer (12), wherein in the combination of the rolling machine (20) and the registration transferring system (30):
the rolling machine (20) is fixed in a support frame (21) and includes two delivery rollers (22), a guiding roller (23), and a pattern roller (24), which are configured to deliver the substrate (11), the printing layer (12) and the abrasion resistance layer (13), respectively, into the rolling machine (20), wherein the pattern roller (24) has pressing patterns (241) corresponding to the convex portion (121) and the concave portion (122) of the printing layer (12), and the pressing patterns (241) have a depressed part (242) and a raised part (243); and
the registration transferring system (30) is configured so that, when the substrate (11), the printing layer (12), and the abrasion resistance layer (13) are pressed together, by mating with the registration transferring system (30) the convex portion (121) of the printing layer (12) corresponds to the depressed part (242) of the pressing patterns (241) and the concave portion (122) of the printing layer (12) corresponds to the raised part (243) of the pressing patterns (241), so that the convex portion (121) and the concave portion (122) of the printing layer (12) press on the abrasion resistance layer (13) and the substrate (11), thus forming the registration patterns on the plastic flooring.

2. The combination of the rolling machine (20) and the registration transferring system (30) as claimed in claim 1, **characterized in that** a first press roller (25) and a second press roller (26) are fixed among the printing layer (12), the guiding roller (23), and the pattern roller (24), and a third press roller (27) and a fourth press roller (28) are mounted among the abrasion resistance layer (13), the guiding roller (23), and the pattern roller (24).

3. The combination of the rolling machine (20) and the registration transferring system (30) as claimed in claim 1, **characterized in that** the registration transferring system (30) includes a feeding roller (31), a heating pipe (32), a tension sensor (33), a first charge coupled device (CCD) (34), a second charge coupled device (CCD) (35), a laser sensor (36), an encoder (37), and an electronic control unit (ECU) (40); the feeding roller (31) and the heating pipe (32) are secured beside the guiding roller (23), the tension sensor (33) is fixed on a rotary shaft of the feeding roller (31), the first CCD (34) is mounted on a starting position of the delivery path to the printing layer (12) so as to detect color codes and node information of the printing layer (12), and the second CCD (35) is disposed on a convey position of the delivery path to the plastic flooring so as to detect an error value of the plastic flooring; the laser sensor (36) is fixed outside the pattern roller (24) so as to detect an original mark of the pattern roller (24), the encoder (37) is secured on a rotary shaft of the pattern roller (24) so as to detect speed mark of the pattern roller (24); and the first CCD (34), the second CCD (35), the laser sensor (36), and the encoder (37) are electrically connected with the ECU (40) in a wireless communication manner so that sensed information of the first CCD (34), the second CCD (35), the laser sensor (36), and the encoder (37) are sent to the ECU (40).

4. The combination of the rolling machine (20) and the registration transferring system (30) as claimed in claim 3, **characterized in that** the ECU (40) includes a controller (41), a first servo (42) configured to drive the feeding roller (31) to rotate, a second servo (43) configured to drive the pattern roller (24) to rotate, a third servo (44) configured to drive the guiding roller (23) to revolve, a fourth servo (45) configured to actuate the two delivery rollers (22) to rotate; wherein the controller (41) is electrically connected with the first servo (42), the second servo (43), the third servo (44), the fourth servo (45), the first CCD (34), the second CCD (35), the encoder (37), the heating pipe (32), and the tension sensor (33), such that the controller (41) receives the sensed information of the first CCD (34), the second CCD (35), the laser sensor (36), and the encoder (37) so as to judge whether the printing layer (12) and the substrate (11) are delivered synchronously; and wherein when the printing layer (12) and the substrate (11) are not delivered synchronously, the controller (41) controls the first servo (42), the second servo (43), the third servo (44), the fourth servo (45), the heating pipe (32), and the tension sensor (33) to operate so as to convey the printing layer (12) and the substrate (11) synchronously again.

5. Method for forming a plastic flooring using the combination of a rolling machine (20) and a registration transferring system (30) as defined in any one of claims 1-4, the plastic flooring comprising a substrate (11), a printing layer (12), and an abrasion resistance layer (13), wherein in the plastic flooring: the substrate (11) includes at least one soft film layer (111) and at least one hard film layer (112);
the printing layer (12) is on a top of the substrate (11) and has, before delivery to the rolling machine (20), a convex portion (121) and a concave portion (122); and
the abrasion resistance layer (13) is on the printing layer (12),
wherein the method comprises the steps of:
delivering, into the rolling machine (20), the substrate (11), the printing layer (12) having the convex portion (121) and the concave portion (122), and the abrasion resistance layer (13), using, respectively, the two delivery rollers (22), the guiding roller (23) and the pattern roller (24) of the rolling machine (20), so that the rolling machine (20) rolls and presses the substrate (11), the printing layer (12) and the abrasion resistance layer (13) together; and
operating the registration transferring system (30) so that, when the substrate (11), the printing layer (12), and the abrasion resistance layer (13) are pressed together, the convex portion (121) of the printing layer (12) corresponds to the depressed part (242) of the pressing patterns (241) of the pattern roller (24) and the concave portion (122) of the printing layer (12) corresponds to the raised part (243) of the pressing patterns (241), so that the convex portion (121) and the concave portion (122) of the printing layer (12) press on the abrasion resistance layer (13) and the substrate (11), thus forming the registration patterns on the plastic flooring.

## Patentansprüche

1. Kombination aus einer Walzmaschine (20) und einem Registerübertragungssystem (30) zum Bilden eines Kunststoff-Bodenbelags, der ein Substrat (11), eine Druckschicht (12) und eine abriebfeste Schicht (13) umfasst, die alle derart in die Walzmaschine (20) eingeführt werden, dass die Walzmaschine (20) das Substrat (11), die Druckschicht (12) und die abriebfeste Schicht (13) walzt und zusammenpresst, wobei bei dem Kunststoff-Bodenbelag:
das Substrat (11) mindestens eine Weichfolienschicht (111) und mindestens eine Hartfolienschicht (112) beinhaltet,
sich die Druckschicht (12) auf einer Oberseite des Substrats (11) befindet und vor dem Einführen in die Walzmaschine (20) einen konvexen Abschnitt (121) und einen konkaven Abschnitt (122) aufweist und
sich die abriebfeste Schicht (13) auf der Druckschicht (12) befindet, wobei bei der Kombination aus der Walzmaschine (20) und dem Registerübertragungssystem (30):
die Walzmaschine (20) in einem Stützrahmen (21) befestigt ist und zwei Zuführungswalzen (22), eine Führungswalze (23) und eine Strukturwalze (24) beinhaltet, die dafür gestaltet sind, das Substrat (11), die Druckschicht (12) beziehungsweise die abriebfeste Schicht (13) in die Walzmaschine (20) zu führen, wobei die Strukturwalze (24) Pressstrukturen (241) aufweist, die dem konvexen Abschnitt (121) und dem konkaven Abschnitt (122) der Druckschicht (12) entsprechen, und die Pressstrukturen (241) einen vertieften Teil (242) und einen erhöhten Teil (243) aufweisen, und
das Registerübertragungssystem (30) derart gestaltet ist, dass, wenn das Substrat (11), die Druckschicht (12) und die abriebfeste Schicht (13) zusammengepresst werden, durch In-Übereinstimmung-Bringen mit dem Registerübertragungssystem (30) der konvexe Abschnitt (121) der Druckschicht (12) dem vertieften Teil (242) der Pressstrukturen (241) entspricht und der konkave Abschnitt (122) der Druckschicht (12) dem erhöhten Teil (243) der Pressstrukturen (241) entspricht, so dass der konvexe Abschnitt (121) und der konkave Abschnitt (122) der Druckschicht (12) auf die abriebfeste Schicht (13) und das Substrat (11) gepresst werden, wodurch die Registerstrukturen auf dem Kunststoff-Bodenbelag gebildet werden.

2. Kombination aus Walzmaschine (20) und Registerübertragungssystem (30) nach Anspruch 1, **dadurch gekennzeichnet, dass** zwischen der Druckschicht (12), der Führungswalze (23) und der Strukturwalze (24) eine erste Presswalze (25) und eine zweite Presswalze (26) befestigt sind und eine dritte Presswalze (27) und eine vierte Presswalze (28) zwischen der abriebfesten Schicht (13), der Führungswalze (23) und der Strukturwalze (24) montiert sind.

3. Kombination aus Walzmaschine (20) und Registerübertragungssystem (30) nach Anspruch 1, **dadurch gekennzeichnet, dass** das Registerübertragungssystem (30) eine Einzugswalze (31), eine Heizleitung (32), einen Spannungssensor (33), eine erste ladungsträgergekoppelte Schaltung (CCD - Charge Coupled Device) (34), eine zweite ladungsträgergekoppelte Schaltung (35), einen Lasersensor (36), einen Codierer (37) und eine elektronische Steuereinheit (ECU - Electronic Control Unit) (40) beinhaltet, wobei die Einzugswalze (31) und die Heizleitung (32) neben der Führungswalze (23) gesichert sind, der Spannungssensor (33) an einer Drehwelle der Einzugswalze (31) befestigt ist, die erste CCD (34) derart an einer Ausgangsposition des Zuführungsweges zu der Druckschicht (12) montiert ist, dass Farbcodes und Knoteninformationen der Druckschicht (12) erkannt werden, und die zweite CCD (35) derart an einer Beförderungsposition des Zuführungsweges zu dem Kunststoff-Bodenbelag angeordnet ist, dass ein Fehlerwert des Kunststoff-Bodenbelages erkannt wird, der Lasersensor (36) außerhalb der Strukturwalze (24) befestigt ist, so dass eine Ursprungsmarkierung der Strukturwalze (24) erkannt wird, der Codierer (37) derart an einer Drehwelle der Strukturwalze (24) gesichert ist, dass eine Drehzahlmarkierung der Strukturwalze (24) erkannt wird, und die erste CCD (34), die zweite CCD (35), der Lasersensor (36) und der Codierer (37) derart elektrisch in Funkkommunikation mit der ECU (40) verbunden sind, dass erfasste Informationen von der ersten CCD (34), der zweiten CCD (35), dem Lasersensor (36) und dem Codierer (37) zur ECU (40) gesendet werden.

4. Kombination aus Walzmaschine (20) und Registerübertragungssystem (30) nach Anspruch 3, **dadurch gekennzeichnet, dass** die ECU (40) eine Steuerung (41), ein erstes Antriebselement (42), das dafür gestaltet ist, die Einzugswalze (31) zum Drehen anzutreiben, ein zweites Antriebselement (43), das dafür gestaltet ist, die Strukturwalze (24) zum Drehen anzutreiben, eine drittes Antriebselement (44), das dafür gestaltet ist, die Führungswalze (23) zum Drehen anzutreiben, ein viertes Antriebselement (45), das dafür gestaltet ist, die zwei Zuführungswalzen (22) zum Drehen zu betätigen, wobei die Steuerung (41) elektrisch mit dem ersten Antriebselement (42), dem zweiten Antriebselement (43), dem dritten Antriebselement (44), dem vierten Antriebselement (45), der ersten CCD (34), der zweiten CCD (35), dem Codierer (37), der Heizleitung (32) und dem Spannungssensor (33) verbunden ist, so dass die Steuerung (41) die erfassten Informationen von der ersten CCD (34), der zweiten CCD (35), dem Lasersensor (36) und dem Codierer (37) empfängt, um zu bewerten, ob die Druckschicht (12) und das Substrat (11) synchron zugeführt werden, und wobei die Steuerung (41), wenn die Druckschicht (12) und das Substrat (11) nicht synchron zugeführt werden, das erste Antriebselement (42), das zweite Antriebselement (43), das dritte Antriebselement (44), das vierte Antriebselement (45), die Heizleitung (32) und den Spannungssensor (33) dafür steuert, so zu arbeiten, dass die Druckschicht (12) und das Substrat (11) wieder synchron befördert werden.

5. Verfahren zum Bilden eines Kunststoff-Bodenbelags unter Verwendung der Kombination aus einer Walzmaschine (20) und einem Registerübertragungssystem (30) nach einem der Ansprüche 1 bis 4, wobei der Kunststoff-Bodenbelag ein Substrat (11), eine Druckschicht (12) und eine abriebfeste Schicht (13) umfasst, wobei bei dem Kunststoff-Bodenbelag: das Substrat (11) mindestens eine Weichfolienschicht (111) und mindestens eine Hartfolienschicht (112) beinhaltet,
sich die Druckschicht (12) auf einer Oberseite des Substrats (11) befindet und vor dem Einführen in die Walzmaschine (20) einen konvexen Abschnitt (121) und einen konkaven Abschnitt (122) aufweist und
sich die abriebfeste Schicht (13) auf der Druckschicht (12) befindet,
wobei das Verfahren folgende Schritte umfasst:
Führen des Substrats (11), der Druckschicht (12) mit dem konvexen Abschnitt (121) und dem konkaven Abschnitt (122) und der abriebfesten Schicht (13) in die Walzmaschine (20) unter jeweiliger Verwendung der zwei Zuführungswalzen (22), der Führungswalze (23) und der Strukturwalze (24) der Walzmaschine (20), so dass die Walzmaschine (20) das Substrat (11), die Druckschicht (12) und die abriebfeste Schicht (13) walzt und zusammenpresst, und
Betreiben des Registerübertragungssystems (30) derart, dass, wenn das Substrat (11), die Druckschicht (12) und die abriebfeste Schicht (13) zusammengepresst werden, der konvexe Abschnitt (121) der Druckschicht (12) dem vertieften Teil (242) der Pressstrukturen (241) der Strukturwalze (24) entspricht und der konkave Abschnitt (122) der Druckschicht (12) dem erhöhten Teil (243) der Pressstrukturen (241) entspricht, so dass der konvexe Abschnitt (121) und der konkave Abschnitt (122) der Druckschicht (12) auf die abriebfeste Schicht (13) und das Substrat (11) gepresst werden, wodurch die Registerstrukturen auf dem Kunststoff-Bodenbelag gebildet werden.

## Revendications

1. Combinaison d'une machine à laminer (20) et d'un système de transfert à alignement (30), pour former un revêtement de sol en matière plastique comprenant un substrat (11), une couche d'impression (12) et une couche de résistance à l'abrasion (13) qui sont tous distribués à la machine à laminer (20) de telle sorte que la machine à laminer (20) lamine et presse le substrat (11), la couche d'impression (12) et la couche de résistance à l'abrasion (13) ensemble, dans laquelle dans le revêtement de sol en matière plastique :
le substrat (11) comprenant au moins une couche de film souple (111) et au moins une couche de film dur (112) ;
la couche d'impression (12) se trouvant sur une partie supérieure du substrat (11) et ayant, avant distribution à la machine à laminer (20), une partie convexe (121) et une partie concave (122) ; et
la couche de résistance à l'abrasion (13) se trouvant sur la couche d'impression (12), dans la combinaison de la machine à laminer (20) et du système de transfert à alignement (30) :
la machine à laminer (20) est fixée dans un bâti de support (21) et comprenant deux rouleaux de distribution (22), un rouleau de guidage (23) et un rouleau de motif (24), qui sont configurés pour distribuer le substrat (11), la couche d'impression (12) et la couche de résistance à l'abrasion (13), respectivement, dans la machine à laminer (20), le rouleau de motif (24) ayant des motifs de pression (241) correspondant à la partie convexe (121) et la partie concave (122) de la couche d'impression (12), et les motifs de pression (241) ayant une partie enfoncée (242) et une partie en relief (243) ; et
le système de transfert à alignement (30) étant configuré de telle sorte que, lorsque le substrat (11), la couche d'impression (12) et la couche de résistance à l'abrasion (13) sont pressés ensemble, par correspondance avec le système de transfert à alignement (30), la partie convexe (121) de la couche d'impression (12) correspond à la partie enfoncée (242) des motifs de pression (241) et la partie concave (122) de la couche d'impression (12) correspond à la partie en relief (243) des motifs de pression (241), de telle sorte que la partie convexe (121) et la partie concave (122) de la couche d'impression (12) appuient sur la couche de résistance à l'abrasion (13) et le substrat (11), formant ainsi les motifs d'alignement sur le revêtement de sol en matière plastique.

2. Combinaison de la machine à laminer (20) et du système de transfert à alignement (30) selon la revendication 1, **caractérisée par le fait qu'**un premier rouleau presseur (25) et un deuxième rouleau presseur (26) sont fixés entre la couche d'impression (12), le rouleau de guidage (23) et le rouleau de motif (24), et un troisième rouleau presseur (27) et un quatrième rouleau presseur (28) sont montés entre la couche de résistance à l'abrasion (13), le rouleau de guidage (23) et le rouleau de motif (24).

3. Combinaison de la machine à laminer (20) et du système de transfert à alignement (30) selon la revendication 1, **caractérisée par le fait que** le système de transfert à alignement (30) comprend un rouleau d'alimentation (31), un tuyau de chauffage (32), un capteur de tension (33), un premier dispositif à couplage de charge (DCC) (34), un second dispositif à couplage de charge (DCC) (35), un capteur laser (36), un codeur (37) et une unité de commande électronique (ECU) (40) ; le rouleau d'alimentation (31) et le tuyau de chauffage (32) sont fixés à côté du rouleau de guidage (23), le capteur de tension (33) est fixé sur un arbre rotatif du rouleau d'alimentation (31), le premier DCC (34) est monté sur une position de début du trajet de distribution vers la couche d'impression (12) de façon à détecter des codes de couleur et des informations de nœud de la couche d'impression (12), et le second DCC (35) est disposé sur une position de transport du trajet de distribution vers le revêtement de sol en matière plastique de façon à détecter une valeur d'erreur du revêtement de sol en matière plastique ; le capteur laser (36) est fixé à l'extérieur du rouleau de motif (24) de façon à détecter un repère d'origine du rouleau de motif (24), le codeur (37) est fixé sur un arbre rotatif du rouleau de motif (24) de façon à détecter un repère de vitesse du rouleau de motif (24) ; et le premier DCC (34), le second DCC (35), le capteur laser (36) et le codeur (37) sont reliés électriquement à l'ECU (40) par une communication sans fil, de telle sorte que des informations détectées du premier DCC (34), du second DCC (35), du capteur laser (36) et du codeur (37) sont envoyées à l'ECU (40) .

4. Combinaison de la machine à laminer (20) et du système de transfert à alignement (30) selon la revendication 3, **caractérisé par le fait que** l'ECU (40) comprend un dispositif de commande (41), un premier servomécanisme (42) configuré pour entraîner le rouleau d'alimentation (31) en rotation, un deuxième servomécanisme (43) configuré pour entraîner le rouleau de motif (24) en rotation, un troisième servomécanisme (44) configuré pour entraîner le rouleau de guidage (23) en rotation, un quatrième servomécanisme (45) configuré pour actionner les deux rouleaux de distribution (22) en rotation ; le dispositif de commande (41) étant relié électriquement au premier servomécanisme (42), au deuxième servomécanisme (43), au troisième servomécanisme (44), au quatrième servomécanisme (45), au premier DCC (34), au second DCC (35), au codeur (37), au tuyau de chauffage (32) et au capteur de tension (33), de telle sorte que le dispositif de commande (41) reçoit les informations détectées du premier DCC (34), du second DCC (35), du capteur laser (36) et du codeur (37) de façon à déterminer si la couche d'impression (12) et le substrat (11) sont distribués de manière synchrone ; et, lorsque la couche d'impression (12) et le substrat (11) ne sont pas distribués de manière synchrone, le dispositif de commande (41) commandant le fonctionnement du premier servomécanisme (42), du deuxième servomécanisme (43), du troisième servomécanisme (44), du quatrième servomécanisme (45), du tuyau de chauffage (32) et du capteur de tension (33) de façon à transporter la couche d'impression (12) et le substrat (11) de nouveau de manière synchrone.

5. Procédé pour former un revêtement de sol en matière plastique à l'aide de la combinaison d'une machine à laminer (20) et d'un système de transfert à alignement (30) selon l'une quelconque des revendications 1 à 4, le revêtement de sol en matière plastique comprenant un substrat (11), une couche d'impression (12) et une couche de résistance à l'abrasion (13), dans le revêtement de sol en matière plastique :
le substrat (11) comprend au moins une couche de film souple (111) et au moins une couche de film dur (112) ;
la couche d'impression (12) se trouve sur une partie supérieure du substrat (11) et a, avant distribution à la machine à laminer (20), une partie convexe (121) et une partie concave (122) ; et
la couche de résistance à l'abrasion (13) se trouve sur la couche d'impression (12),
le procédé comprenant les étapes :
distribuer, dans la machine à laminer (20), le substrat (11), la couche d'impression (12) ayant la partie convexe (121) et la partie concave (122), et la couche de résistance à l'abrasion (13) à l'aide, respectivement, des deux rouleaux de distribution (22), du rouleau de guidage (23) et du rouleau de motif (24) de la machine à laminer (20), de telle sorte que la machine à laminer (20) lamine et presse le substrat (11), la couche d'impression (12) et la couche de résistance à l'abrasion (13) ensemble ; et
actionner le système de transfert à alignement (30) de telle sorte que, lorsque le substrat (11), la couche d'impression (12) et la couche de résistance à l'abrasion (13) sont pressés ensemble, la partie convexe (121) de la couche d'impression (12) correspond à la partie enfoncée (242) des motifs de pression (241) du rouleau de motif (24) et la partie concave (122) de la couche d'impression (12) correspond à la partie en relief (243) des motifs de pression (241), de telle sorte que la partie convexe (121) et la partie concave (122) de la couche d'impression (12) appuient sur la couche de résistance à l'abrasion (13) et le substrat (11), formant ainsi les motifs d'alignement sur le revêtement de sol en matière plastique.
